# EUROPEAN PATENT APPLICATION

(11) **EP 4 545 604 A1**
(43) Date of publication of application: **30.04.2025**
(21) Application number: 24208716.1
(22) Date of filing: 24.10.2024
(51) Int. Cl.: C09B 67/22, C09B 67/46, D06P 1/16, D06P 1/18, D06P 1/20, D06P 3/54, D06P 3/82

(54) **DYE COMPOSITION FOR POLYLACTIC ACID FIBER AND DYEING METHOD**

(30) Priority: 27.10.2023 CN 202311416267
(71) Applicant: NIPPON KAYAKU KABUSHIKI KAISHA, Tokyo 115-8588 (JP); HighChem Company Limited, Tokyo 105-0001 (JP)
(72) Inventor: YABE, Shigemitu, Tokyo, 1158588 (JP); TOKUYAMA, Hiromitsu, Tokyo, 1158588 (JP); SASAYAMA, Atsushi, Tokyo, 1158588 (JP); TAKA, Yuichi, Tokyo, 105-0001 (JP); FUJIWARA, Fumitoshi, Tokyo, 105-0001 (JP)
(74) Representative: Maiwald GmbH

(57) **Abstract**

The present invention relates to a dye composition for a polylactic acid fiber and a dyeing method.
The objective is to provide a dye composition for a polylactic acid fiber having excellent dyeing exhaustion behaviors of a yellow-based disperse dye, a red-based disperse dye, and a blue-based disperse dye on a polylactic acid fiber, and uniform dyeing speeds of the colors during dyeing, and good reproducibility, and a dyeing method.
Provided is a dye composition for a polylactic acid fiber, comprising: a yellow-based disperse dye represented by the following formula (1) and/or the following formula (2), a red-based disperse dye represented by the following formula (3), and a blue-based disperse dye represented by the following formula (4) and/or a blue-based disperse dye that is a mixture of the two isomers represented by the following formula (5). 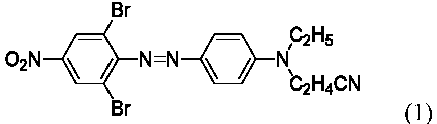 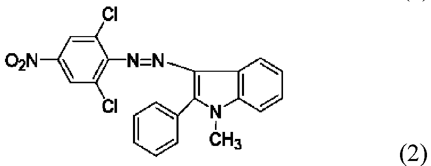 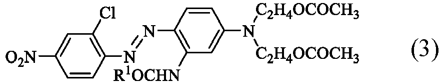 (In the formula, R¹ represents methyl or ethyl.) 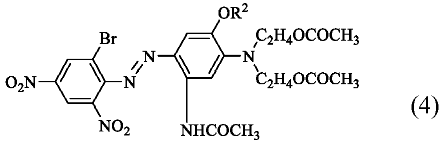 (In the formula, R² represents methyl or ethyl.) 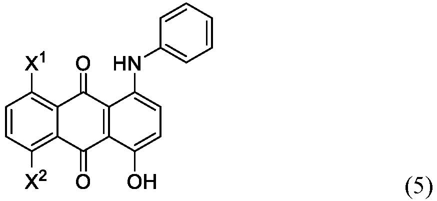 (In the formula, either of X¹ and X² represents NO₂, and the other represents OH.)

## Description

### TECHNICAL FIELD

The present invention relates to a method for dyeing a polylactic acid fiber using a disperse dye, and more specifically to a dye composition comprising a yellow-based disperse dye, a red-based disperse dye, and a blue-based disperse dye, and a method for dyeing a polylactic acid fiber or the like using the same.

### BACKGROUND

Against the backdrop of recent environmental issues, the polylactic acid fiber has been attracting much attention as a non-petroleum biodegradable fiber.

Unlike petroleum, the polylactic acid fiber as a raw material of existing plastics can be harvested annually from renewable plant resources such as corn, and thus the polylactic acid fiber is expected to be a material that contributes to the realization of a sustainable society (e.g., Non-Patent Literature 1).

Since plant-derived synthetic fibers such as polylactic acid fibers are fibers obtained by fixating carbon dioxide gas in the ecosystem, production of carbon dioxide gas by combustion or microbial-based biodegradation of polylactic acid fibers is simply a restoration of the carbon dioxide gas that is originally present in the ecosystem and will have no influence on the existing carbon dioxide gas on the earth, that is, polylactic acid fibers are a carbon-neutral raw material.

Besides the biodegradability function, the polylactic acid fibers are also featured in new attractions of comfort unfound in existing synthetic fibers, such as handling touch, light weight, moisture wicking, mild antibacterial properties, and skin-friendly weak acidity. Therefore, they are highly expected to be general-purpose fibers as substitutes of polyesters (e.g., Non-Patent Literature 2).

It is known that the method for dyeing a polylactic acid fiber with a disperse dye is optimal, but the dye exhaustion rate varies depending on the dye, which makes color matching difficult and reproducibility not very good.

Furthermore, polylactic acid fibers have poorer heat resistance than polyester fibers, and therefore give rise to the problems of hard texture after heat treatment and hydrolysis occurring under high temperature (60°C or higher) and high humidity conditions.

In the existing disperse dye compositions disclosed in Patent Literatures 1 to 3 and the like, the disperse dyes are capable of dyeing polylactic acid fibers, but they are not satisfactory as three-primary color dyes with excellent reproducibility.

In the case of dyeing with the three-primary color dyes, by allowing the dyeing speeds of the three-primary colors to be substantially the same, the reproducibility becomes good, and the problems about the color difference between the laboratory and the factory and about poor reproducibility are resolved, thereby improving the productivity.

### Prior-Art Literatures

### Patent Literatures

Patent Literature 1: Japanese Patent No. 4346611
Patent Literature 2: Japanese Patent No. 4424466
Patent Literature 3: Japanese Published Application No. 2006-8871

### Non-Patent Literatures

Non-Patent Literature 1: "Journal of the Textile Machinery Society", Vol. 56, No. 3 (2003), p133-136
Non-Patent Literature 2: "Society of Fiber Science and Technology", Vol. 59, No. 10 (2003), p329-332

### SUMMARY

### Technical Problem

To address the above problems, there is provided a high-performance disperse dye composition having excellent dyeing exhaustion behaviors of a yellow-based disperse dye, a red-based disperse dye, and a blue-based disperse dye on a polylactic acid fiber, or uniform dyeing speeds of the colors during dyeing, good reproducibility, and excellent light fastness, and a dyeing method using the same.

### Solution to Problem

In order to solve the above problems, the present inventors have conducted intensive studies and found a dye composition which, by combining a yellow-based disperse dye, a red-based disperse dye, and a blue-based disperse dye, has an excellent dyeing exhaustion behavior on polylactic acid fibers and uniform dyeing characteristics during dyeing or excellent light fastness. The present invention has therefore been completed.

That is, the present invention concerns the following (1) to (8):
(1) A dye composition for a polylactic acid fiber, comprising:
   a yellow-based disperse dye represented by the following formula (1) and/or a yellow-based disperse dye represented by the following formula (2),
   a red-based disperse dye represented by the following formula (3), and
   a blue-based disperse dye represented by the following formula (4) and/or a blue-based disperse dye that is a mixture of the two isomers represented by the following formula (5). 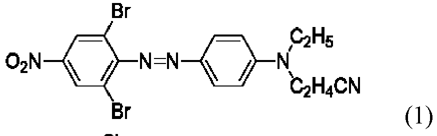 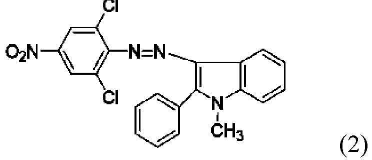 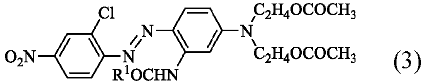 (In the formula, R¹ represents methyl or ethyl.) 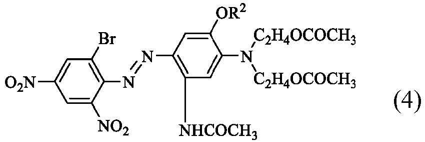 (In the formula, R² represents methyl or ethyl.) 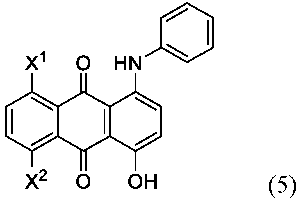 (In the formula, either of X¹ and X² represents NO₂, and the other represents OH.)
(2) The dye composition for the polylactic acid fiber according to (1), further comprising less than 5 parts by mass of a mixture of two dye compounds represented by the following formula (6) when a total amount of the aforesaid yellow-based disperse dye, the aforesaid red-based disperse dye, and the aforesaid blue-based disperse dye is set to 100 parts by mass. 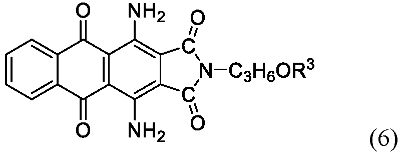 (In the formula, R³ represents methyl or a methyl ethyl ether group.)
(3) The dye composition for the polylactic acid fiber according to (1) or (2), wherein the aforesaid disperse dye is dispersed in water by the dispersant.
(4) The dye composition for the polylactic acid fiber according to (3), wherein the aforesaid dispersant is one or more compounds selected from the group consisting of a formaldehyde condensate of naphthalene sulfonic acid and alkylbenzenesulfonic acid, a formaldehyde condensate of naphthalene sulfonic acid, a formaldehyde condensate of cresolsulfonic acid, a formaldehyde condensate of cresol and 2-naphthol-6-sulfonic acid, a formaldehyde condensate of alkylnaphthalenesulfonic acid, a formaldehyde condensate of creosote oil sulfonic acid, lignosulfonic acid, a block copolymer of ethylene oxide and propylene oxide, an ethylene oxide adduct of alkylphenol, and an ethylene oxide adduct of polystyrenated phenol.
(5) The dye composition for the polylactic acid fiber according to any one of (1) to (4), wherein a content of quinoline contained as an impurity derived from dispersants is less than 1000 ppm.
(6) A dyed polylactic acid fiber, which is obtained by dyeing with the dye composition for the polylactic acid fiber according to any one of (1) to (5).
(7) A method for dyeing a polylactic acid fiber, comprising the following steps: a step of preparing a dye dispersion by diluting the dye composition for the polylactic acid fiber according to any one of (1) to (5); and a step of immersing the polylactic acid fiber in the aforesaid dye dispersion.
(8) The method for dyeing the polylactic acid fiber according to (7), wherein in the step of immersion, a temperature of the aforesaid dye composition for the polylactic acid fiber is set to 110°C to 120°C.

### Advantageous Effects of the Invention

The present invention could provide a dye composition for a polylactic acid fiber having excellent dyeing exhaustion behaviors of a yellow-based disperse dye, a red-based disperse dye, and a blue-based disperse dye on a polylactic acid fiber, and uniform dyeing speeds of the colors during dyeing, good reproducibility, and excellent light fastness, and a dyed product and a dyeing method using the same.

### DETAILED DESCRIPTION

The present invention will be described in detail below. The dye composition for the polylactic acid fiber according to the present invention contains: a yellow-based disperse dye, a red-based disperse dye, and a blue-based disperse dye.

The yellow-based disperse dye contains a compound represented by the following formula (1) and/or a compound represented by the following formula (2).

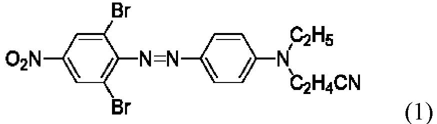

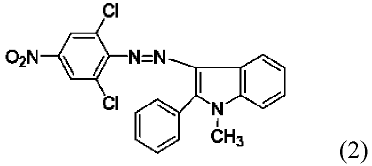

The compound represented by formula (1) is C.I. DISPERSE ORANGE 61, or may be produced by a method known in the literature, or a commercially available compound may be used. The compound represented by formula (2) is C.I. DISPERSE ORANGE 155, or may be produced by a method known in the literature, or a commercially available compound may be used.

The red-based disperse dye is a compound represented by formula (3) below. 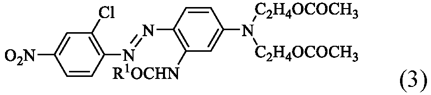 (In the formula, R¹ represents methyl or ethyl.)

The compound represented by formula (3) is C.I. DISPERSE RED 167 or C.I. DISPERSE RED 167.1, or may be produced by a method known in the literature, or a commercially available compound may be used.

The blue-based disperse dye contains a blue-based disperse dye represented by the following formula (4) and/or a blue-based disperse dye that is a mixture of a dye and an isomer thereof represented by formula (5) below. 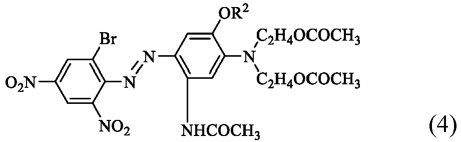 (In the formula, R² represents methyl or ethyl.) 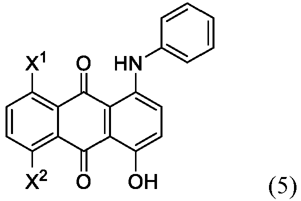 (In the formula, either of X¹ and X² represents NO₂, and the other represents OH.)

In addition, the mixture of the two isomers refers to a mixture of the two dyes of the following chemical formula (5), one wherein X¹ represents NO₂, and X² represents OH, and one wherein X² represents NO₂, and X¹ represents OH.

The compound represented by formula (4) is C.I. DISPERSE BLUE 79 or C.I. DISPERSE BLUE 79.1, or may be produced by a method known in the literature, or a commercially available compound may be used.

The mixture of two isomers represented by formula (5) is C.I. DISPERSE BLUE 54, or may be produced by a method known in the literature, or a commercially available compound may be used.

The dye composition for the polylactic acid fiber comprises a dye mixture of a yellow-based disperse dye represented by formula (1) and/or formula (2), a red-based disperse dye represented by formula (3), and a blue-based disperse dye represented by formula (4) and/or a blue-based disperse dye that is a mixture of two isomers represented by formula (5). In the dye mixture, the proportions are not particularly limited, but it is preferable to contain 10 to 90 mass% of the yellow-based disperse dye, 2 to 90 mass% of the red-based disperse dye, and 10 to 90 mass% of the blue-based disperse dye; and it is more preferable to contain 20 to 50 mass%, such as 20 to 40 mass%, of the yellow-based disperse dye, 2 to 40 mass% of the red-based disperse dye, and 20 to 70 mass%, such as 20 to 58 mass% of the blue-based disperse dye, the mass percentages adding up to 100% of the dye mixture.

The dye composition for the polylactic acid fiber may further contain a mixture of two dye compounds represented by formula (6) below. 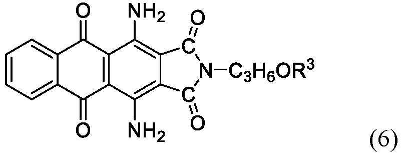 (In the formula, R³ represents methyl or an ethyl methyl ether group.)

By containing a mixture of two dye compounds represented by formula (6), the color rendering properties of the dyed product can be improved. The mixture of the two dye compounds represented by formula (6) is C.I. DISPERSE BLUE 204, or may be produced by a method known in the literature, or a commercially available compound may be used. When a total amount of the aforesaid yellow-based disperse dye, the aforesaid red-based disperse dye, and the aforesaid blue-based disperse dye is set to 100 parts by mass, the content of the mixture of the two dye compounds represented by formula (6) in the dye composition for the polylactic acid fiber is preferably 0.1 part by mass or more and less than 5 parts by mass, such as 1 to 4 parts by mass, or 2 to 4 parts by mass.

The dye composition for polylactic acid fibers preferably contains 20-40 mass% of the yellow-based disperse dye, 2-40 mass% of the red-based disperse dye, 15-53 mass% of the blue-based disperse dye, and 1-5 mass% of a mixture of two dye compounds represented by formula (6).

The dye composition for polylactic acid fibers preferably further contains a dispersant. The disperse dyes are preferably dispersed by the dispersant. Therefore, the dispersant is preferably a dispersant which is suitable to disperse disperse dyes, in particular the disperse dyes comprised in the dye composition, in water. Examples of the dispersant may be, for example, one or more compounds selected from the group consisting of a formaldehyde condensate of naphthalene sulfonic acid and alkylbenzenesulfonic acid, a formaldehyde condensate of naphthalene sulfonic acid, a formaldehyde condensate of cresolsulfonic acid, a formaldehyde condensate of cresol and 2-naphthol-6-sulfonic acid, a formaldehyde condensate of alkylnaphthalenesulfonic acid, a formaldehyde condensate of creosote oil sulfonic acid, lignosulfonic acid, a block copolymer of ethylene oxide and propylene oxide, an ethylene oxide adduct of alkylphenol, an ethylene oxide adduct of polystyrenated phenol, and salts thereof. Preferably, the dispersant comprises or consists of a formaldehyde condensate of naphthalene sulfonic acid and/or sodium ligninsulfonate, more preferably the dispersant consists of a formaldehyde condensate of naphthalene sulfonic acid and sodium ligninsulfonate. These dispersants may be commercially available. By using these dispersants, the disperse dyes can be dispersed in water. The content of the one or more dispersant in the disperse dye composition is preferably 30 to 80 mass%, more preferably 50 to 80 mass%, calculated based on the solid content of the dye composition. The disperse dyes in the dye composition can be dispersed in water by known methods.

The content of quinoline, which is included as an impurity derived from dispersants, is preferably less than 1000 ppm. Quinoline appears as a contaminant in dispersants and is classified as a carcinogen. In addition, it is highly water-soluble and toxic to aquatic life. In recent years, it has been a restricted substance to REACH (Registration, Evaluation, Authorization and Restriction of Chemicals) and bluesign (a registered trademark).

The disperse dye composition may be prepared by mixing disperse dyes and optionally dispersants and optionally other components. The disperse dye composition is preferably subjected to microparticulation treatment. The microparticulation treatment may be carried out by thoroughly wet-pulverizing the disperse dye composition in the presence of a small amount of water using a pulverizer such as a ball mill or a sand mill until it becomes about 0.2 to 1.0 µm in average particle size (D50) in general, determined, for example, by laser diffraction. The disperse dye composition may be kept in the form of a liquid or paste as it is microparticulated or in the form of powder dried by a spray method, etc.

The other components may include, for example, a dustless agent, a mildewproofing agent, a defoaming agent, a penetrating agent, a pH adjuster, etc. As these components, common substances may be used, and their content in the disperse dye composition can be appropriately adjusted as long as the effect of the present invention is not impaired.

The method for dyeing polylactic acid fibers will be described. The method for dyeing polylactic acid fibers is not limited to the following description. The method for dyeing polylactic acid fibers is characterized by comprising a step of immersing a polylactic acid fiber in a dye dispersion.

The dye dispersion may be prepared by adding a disperse dye composition to water and mixing them.

The pH of the dye dispersion is preferably adjusted to 4 to 5. The pH may be adjusted by adding commonly-used pH adjusters, such as acetic acid and sodium acetate. The content of the disperse dye in the dye dispersion is preferably adjusted to 0.005 to 10% on the weight of fiber with respect to the mass of the polylactic acid fiber to be dyed.

The dyeing conditions may be known conditions and are not particularly limited. For example, it is preferable to immerse a polylactic acid fiber and dye it under pressure at a temperature of preferably about 110°C to 120°C, preferably 115°C to 120°C for 30 min to 1 hour. By raising the temperature, the dye exhaustion rate is increased and it becomes easier to obtain a dark or black color. Besides, the increased dye exhaustion rate makes the amount of dye solution left in the residual bath reduced, so the reproducibility becomes better.

After the dyeing step, it is desirable to subject the dyed polylactic acid fiber to treatments such as rinsing, soaping, and reduction clearing in order to remove the unadsorbed dyes on the fiber surface.

It is desirable to carry out treatments such as soaping and reduction clearing at 60°C or lower. If treatments are carried out at 65°C or higher, the newly adsorbed disperse dye may fall off from the polylactic acid fiber, which may cause a decrease in color depth.

This dyeing method provides sufficient performance to withstand practicality, for example, high light fastness and washing fastness, good color shade, and sufficient dyeing reproducibility.

Next, the polylactic acid fibers will be described.

Any polylactic acid fiber may be used in the invention, for example polylactic acid fiber from corn, cassava, or sugarcane, preferably from corn. The raw material should be of a raw material grade suitable for the fiber grade, and the resulting fiber should maintain the strength to withstand use as a raw material for apparel products. The polylactic acid fiber preferably is made from corn, more preferably from corn which is of a raw material grade suitable for the fiber grade and maintains the strength to withstand use as a raw material for apparel products. The polylactic acid fiber may be the polylactic acid fiber used in the Examples. In addition, while existing polylactic acid fibers harden when dyed at a temperature of 100°C to 110°C or higher, it has been confirmed that polylactic acid fibers made from corn, for example the polylactic acid fibers used herein, such as HIGHLACT^{(™)}, will not harden even when dyed at a high temperature of 120°C to 130°C.

### Examples

The present invention will be described in detail with reference to the following examples and comparative examples, but the present invention is not limited thereto. In the examples, "%" refers to "mass%". Besides, C.I. DISPERSE refers to the generic name of a color index.

### [Dyeing Suitability of Disperse Dye for Polylactic Acid Fiber]

The disperse dyes represented by Nos. 1 to 44 below were used. Commercially available disperse dyes were used as the disperse dyes represented by Nos. 1 to 44.
[1] Each of the dye compounds listed in Table 1 was mixed with an equal amount of a dispersant composed of a formaldehyde condensate of naphthalene sulfonic acid and sodium ligninsulfonate, and a trace amount of dustless agent was added. The mixture was subjected to microparticulation treatment by a conventional method and drying to prepare a dye composition for a polylactic acid fiber.
[2] Dyeing of polylactic acid fibers
   The amount of disperse dye that could yield 1.0% on the weight of fiber of a dyed product was measured. 0.5 g/L of dispersing and levelling agent KP Leveller AL (manufactured by Nippon Kayaku Co., Ltd., anionic surfactant) were added. Thereafter, the mixture was added to water adjusted to pH 4.5 with acetic acid and sodium acetate, and the total volume was adjusted to 100 mL. 5 g of grey polylactic acid fabric (manufactured by HIGHCHEM CO., LTD.) were immersed in this dye bath (dye dispersion) and dyed at 120°C for 60 min. The dyed polylactic acid fabric was subjected to reduction clearing at 60°C for 10 min in a bath containing 3 g/L of soda ash, 3 g/L of hydrosulfite, 1 g/L of SUNMORL RC-700E (manufactured by NICCA Chemical Co., Ltd., anionic surfactant), and water to make the total volume 100 mL (the hydrosulfite was added at 60°C), rinsing, and drying to yield the dyed product.
[3] Dyeing of polyester fibers in residual solution

The total volume of the dye solution left in the tank was adjusted to 80 mL, in which 4 g of Polyester tropical (manufactured by Shikisensha Co. Ltd.) were immersed and dyed at 135°C for 30 min.

The dyeing suitability of each of the disperse dyes to the polylactic acid fiber is shown in Table 1. The dyeing suitability is based on the dyeing exhaustion behavior, such as the degree of dyeing concentration of how much each disperse dye dyes on polylactic acid fibers, as explained below.

**[Table 1]**

| No. | Color Index | Dyeing suitability | No. | Color Index | Dyeing suitability |
|---|---|---|---|---|---|
| 1 | C.I. Disperse Yellow 42 | ○ | 23 | C.I. Disperse Yellow 64 | Δ |
| 2 | C.I. Disperse Yellow 54 | ○ | 24 | C.I. Disperse Yellow 114 | × |
| 3 | C.I. Solvent Yellow 163 | ○ | 25 | C.I. Disperse Yellow 163 | × |
| 4 | C.I. Disperse Orange 30 | ○ | 26 | C.I. Disperse Yellow 211 | × |
| 5 | C.I. Disperse Orange 61 | ○ | 27 | C.I. Disperse Red 86 | × |
| 6 | C.I. Disperse Orange 73 | ○ | 28 | C.I. Disperse Red 145 | × |
| 7 | C.I. Disperse Orange 155 | ○ | 29 | C.I. Disperse Red 152 | × |
| 8 | C.I. Disperse Red 60 | ○ | 30 | C.I. Disperse Red 153 | × |
| 9 | C.I. Disperse Red 73 | ○ | 31 | C.I. Disperse Red 179 | Δ-× |
| 10 | C.I. Disperse Red 92 | ○-Δ | 32 | C.I. Disperse Red 191 | × |
| 11 | C.I. Disperse Red 146 | ○ | 33 | C.I. Disperse Violet 93 | Δ-× |
| 12 | C.I. Disperse Red 154 | ○ | 34 | C.I. Disperse Blue 56 | Δ |
| 13 | C.I. Disperse Red 167.1 | ○-Δ | 35 | C.I. Disperse Blue 60 | × |
| 14 | C.I. Disperse Red 258 | ○-Δ | 36 | C.I. Disperse Blue 73 | × |
| 15 | C.I. Disperse Violet 26 | ○ | 37 | C.I. Disperse Blue 73.1 | × |
| 16 | C.I. Disperse Blue 54 | ○-Δ | 38 | C.I. Disperse Blue 77 | × |
| 17 | C.I. Disperse Blue 79.1 | ○ | 39 | C.I. Disperse Blue 165 | × |
| 18 | C.I. Disperse Blue 148 | ○ | 40 | C.I. Disperse Blue 183 | Δ |
| 19 | C.I. Disperse Blue 204 | ○-Δ | 41 | C.I. Disperse Blue 257 | Δ |
| 20 | C.I. Disperse Blue 284 | ○ | 42 | C.I. Disperse Blue 291 | Δ |
| 21 | C.I. Disperse Blue 340 | ○ | 43 | C.I. Disperse Blue 291.1 | Δ |
| 22 | C.I. Disperse Blue 341 | ○ | 44 | C.I. Disperse Blue 366 | × |

### (Determination Method)

The dyeing exhaustion behaviors were determined from the dyed products of the polylactic acid fibers and the dyed products of polyester obtained by dyeing in the residual bath. Dyeing exhaustion behavior: ○ good; △ slightly poor; x poor.

Based on the results in Table 1, it could be determined that the dyed products obtained from Nos. 1 to 22 had good dyeing suitability (good dyeing exhaustion behavior), and the dyed products obtained from Nos. 23 to 44 had a poor dyeing exhaustion behavior. The results show that the dyed products obtained from Nos. 1 to 22 exhibited a good dyeing exhaustion behavior on polylactic acid fibers.

### [Example 1: Dye Composition for Polylactic Acid Fiber]

A yellow-based dye, a red-based dye, and a blue-based dye were mixed at the ratios shown in Table 2. This dye mixture was mixed with an equal amount of a dispersant composed of a formaldehyde condensate of naphthalene sulfonic acid and sodium ligninsulfonate, and a trace amount of dustless agent was added. The mixture was subjected to microparticulation treatment by a conventional method and drying to yield the dye composition for the polylactic acid fiber.

### [Examples 2 to 7: Dye Compositions for Polylactic Acid Fibers]

The dye compositions for polylactic acid fibers were prepared according to the same steps described in Example 1, except that the dyes were those listed in Table 2.

### [Comparative Examples 1 to 6: Dye Compositions for Polylactic Acid Fibers]

The dye compositions for polylactic acid fibers were prepared according to the same steps described in Example 1, except that the dyes were those listed in Table 3.

### [STEP DYEING TEST]

The amount of the dye composition for the polylactic acid fiber that could yield 1.0% o.w.f. of a dyed product was measured (referring to Table 2 for the component proportions). 0.5 g/L of the dispersing and levelling agent KP Leveller AL (manufactured by Nippon Kayaku Co., Ltd., anionic surfactant) were added. Thereafter, the mixture was added to water adjusted to pH 4.5 with acetic acid and sodium acetate, and the total volume was adjusted to 100 mL. 5 g of grey polylactic acid fabric ("Highlact" manufactured by HIGHCHEM CO., LTD.) were immersed in this dye bath (dye dispersion). The temperature was raised by 1°C within 1 min starting from 50°C, and the dyed product of polylactic acid was removed from the dye bath at 60°C, 70°C, 80°C, 90°C, 100°C, 110°C, 120°C, 120°C for 30 min, and 120°C for 60 min. The dyeing at each temperature was completed. The dyed polylactic acid fabric was subjected to reduction clearing at 60°C for 10 min in a bath containing 3 g/L of soda ash, 3 g/L of hydrosulfite, 1 g/L of SUNMORL RC-700E (manufactured by NICCA Chemical Co., Ltd., anionic surfactant), and water to make the total volume 100 mL (the hydrosulfite was added at 60°C), rinsing, and drying to yield the dyed product.

### [Dyeing of Polyester Fibers in Residual Solution]

The remaining dye solution from the tank removed at each temperature was adjusted to a total volume of 80 mL, in which 4 g of Polyester tropical (manufactured by Shikisensha Co. Ltd.) were immersed and dyed at 135°C for 30 min. The compounding values in Table 2 indicated mass%.

### (Determination Method for Dyeing Speed)

The dyeing speed was determined from the dyed products of the polylactic acid fibers dyed at the temperatures and the dyed products of polyester obtained by dyeing in the residual bath. The dyeing speeds of the dispersion compositions on the polylactic acid fibers were shown in Table 2 and Table 3.

Criteria for determining the dyeing speed:
A: the dyeing speeds were very uniform.
B: the dyeing speeds were relatively uniform.
C: the dyeing speeds were somewhat uniform.
D: the dyeing speeds were not very uniform.
E: the dyeing speeds were significantly not uniform.

### [Test for Light fastness]

The amount of the dye composition for the polylactic acid fiber that could yield 3.0% based on the weight of fiber of a dyed product was measured (referring to Table 2 for the component proportions). 0.5 g/L of dispersing and levelling agent KP Leveller AL (manufactured by Nippon Kayaku Co., Ltd., anionic surfactant) were added. Thereafter, the mixture was added to water adjusted to pH 4.5 with acetic acid and sodium acetate, and the total volume was adjusted to 100 mL. 5 g of grey polylactic acid fabric ("Highlact" manufactured by HIGHCHEM CO., LTD.) were immersed in this dye bath (dye dispersion). After 60 min at 120°C, the dyed product of the polylactic acid was removed from the dye bath. The dyeing at each temperature was completed. The dyed polylactic acid fabric was subjected to reduction clearing at 60°C for 10 min in a bath containing 3 g/L of soda ash, 3 g/L of hydrosulfite, 1 g/L of SUNMORL RC-700E (manufactured by NICCA Chemical Co., Ltd., anionic surfactant), and water to make the total volume 100 mL (the hydrosulfite was added at 60°C), rinsing, and drying to yield the dyed product.

The light fastness test was carried out using a Xenon Weather Meter NX75 manufactured by Suga Test Instruments Co., Ltd. as a testing apparatus under the conditions of Method A described in JIS L0843: 2006 "Test Methods for Color Fastness to Xenon Arc Lamp Light". The discoloration and fading of the irradiated area was determined by the Blue Scale of JIS L0841: 2004. The results are shown in Table 2 and Table 3. For the light fastness, Grade 4 or higher was desirable when high fastness was required.

**[Table 2]**

| | Examples | | | | | | |
|---|---|---|---|---|---|---|---|
| Color Index | 1 | 2 | 3 | 4 | 5 | 6 | 7 |
| Disperse Orange 61 | 33 | 28 | | | 33 | 33 | |
| Disperse Orange 155 | | 6 | 33 | 33 | | | 33 |
| Disperse Red 167.1 | 33 | 33 | 33 | 33 | 33 | 33 | 33 |
| Disperse Blue 54 | 6.8 | 11 | | 34 | 34 | 17 | 17 |
| Disperse Blue 79.1 | 27.2 | 19 | 34 | | | 17 | 17 |
| Disperse Blue 204 | | 3 | | | | | |
| Dyeing speed | A | A | A | B | A | A | A |
| Light fastness | Grade 4 | Grade 4 | Grade 3~4 | Grade 4 or higher | Grade 4 or higher | Grade 4 | Grade 4 |

**[Table 3]**

| | Comparative Examples | | | | | |
|---|---|---|---|---|---|---|
| Color Index | 1 | 2 | 3 | 4 | 5 | 6 |
| Solvent Yellow 163 | 34 | 34 | 34 | | 34 | |
| Disperse Yellow 42 | | | | 34 | | |
| Disperse Orange 61 | | | | | | 34 |
| Disperse Red 92 | 33 | 33 | 33 | 33 | 33 | |
| Disperse Red 167.1 | | | | | | 33 |
| Disperse Blue 54 | 33 | | | | | |
| Disperse Blue 148 | | 33 | | | | 33 |
| Disperse Blue 284 | | | 33 | 33 | | |
| Disperse Blue 341 | | | | | 33 | |
| Dyeing speed | E | D | E | E | D | D |
| Light fastness | Grade 4 or higher | Grade 3~4 | Grade 3~4 | Grade 3~4 | Grade 3~4 | Grade 3~4 |

The results in Table 2 show that the dyed products obtained from Examples 1 to 7 had a good dyeing speed, excellent light fastness, and excellent properties as dyed products of polylactic acid. However, the results in Table 3 show that the dyed products obtained from Comparative Examples 1 to 6 did not have uniform dyeing speeds and their reproducibility was poor. Furthermore, the color rendering properties of the dyed product obtained from Example 2 was also improved.

## Claims

1. A dye composition, comprising:
a yellow-based disperse dye represented by the following formula (1) and/or a yellow-based disperse dye represented by the following formula (2),
a red-based disperse dye represented by the following formula (3), and
a blue-based disperse dye represented by the following formula (4) and/or a blue-based disperse dye that is a mixture of the two isomers represented by the following formula (5): 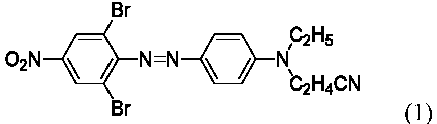 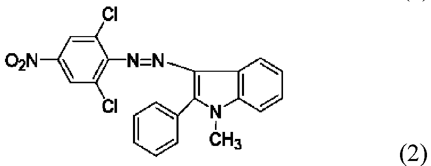 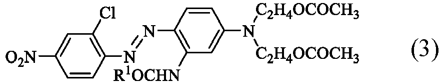 in the formula, R¹ represents methyl or ethyl, 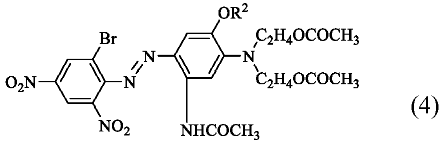 in the formula, R² represents methyl or ethyl, 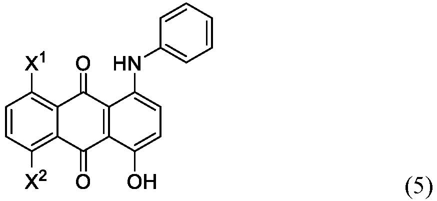 in the formula, either of X¹ and X² represents NO₂, and the other represents OH.

2. The dye composition according to claim 1, further comprising less than 5 parts by mass of a mixture of two dye compounds represented by the following formula (6) when a total amount of the yellow-based disperse dye, the red-based disperse dye, and the blue-based disperse dye is set to 100 parts by mass: 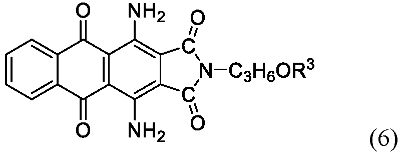 in the formula, R³ represents methyl or a methyl ethyl ether group.

3. The dye composition according to claim 1 or 2, additionally comprising a dispersant.

4. The dye composition according to claim 3, wherein the dispersant is one or more compounds selected from the group consisting of a formaldehyde condensate of naphthalene sulfonic acid and alkylbenzenesulfonic acid, a formaldehyde condensate of naphthalene sulfonic acid, a formaldehyde condensate of cresolsulfonic acid, a formaldehyde condensate of cresol and 2-naphthol-6-sulfonic acid, a formaldehyde condensate of alkylnaphthalenesulfonic acid, a formaldehyde condensate of creosote oil sulfonic acid, lignosulfonic acid, a block copolymer of ethylene oxide and propylene oxide, an ethylene oxide adduct of alkylphenol, an ethylene oxide adduct of polystyrenated phenol, and salts thereof.

5. The dye composition according to any one of claims 3 to 4, wherein a content of quinoline contained as an impurity derived from dispersants is less than 1000 ppm in the dye composition.

6. A dyed polylactic acid fiber, which was obtained by dyeing with the dye composition according to any one of claims 1 to 5.

7. A method for dyeing a polylactic acid fiber, comprising the following steps: a step of preparing a dye dispersion by diluting the dye composition according to any one of claims 1 to 5 with water; and a step of immersing the polylactic acid fiber in the dye dispersion.

8. The method for dyeing the polylactic acid fiber according to claim 7, wherein in the step of immersion, a temperature of the dye dispersion is set to 110°C to 120°C.
